# EUROPEAN PATENT APPLICATION

(11) **EP 1 100 261 A1**
(43) Date of publication of application: **16.05.2001**
(21) Application number: 00122009.4
(22) Date of filing: 10.10.2000
(51) Int. Cl.: H04N 5/217

(54) **Image distortion correcting device**

(30) Priority: 12.11.1999 JP 32263299
(71) Applicant: Kabushiki Kaisha Toyoda Jidoshokki Seisakusho, Aichi-ken (JP)
(72) Inventor: Tanaka, Hiroshi, Kariya-shi, Aichi-ken (JP); Shimazaki, Kazunori, Kariya-shi, Aichi-ken (JP)
(74) Representative: Leson, Thomas Johannes Alois, Dipl.-Ing.

(57) **Abstract**

In an image distortion correcting device of the present invention, an arithmetic section sequentially captures an image signal of a screen composed of a plurality of lines by an image pickup camera and writes it in a memory, obtains a shift amount necessary for each pixel on the basis of a map stored in a ROM, and reads out an image signal corresponding to each line of an output image from the memory in accordance with this shift amount and sequentially outputs it to a display.

## Description

### BACKGROUND OF THE INVENTION

### FIELD OF THE INVENTION:

The present invention relates to an image distortion correcting device, and particularly in an image signal processing device, the present invention relates to a device for correcting distortion or the like of an image due to lens distortion of a camera.

### DESCRIPTION OF THE RELATED ART:

When an image is captured by using an image pickup camera, the image is distorted according to the distortion of a lens system of the camera. Then, when such distortion of the image is to be lessened, input signals for one screen taken by the camera are sequentially stored in a memory, and after the influence of the lens distortion is corrected by shifting respective pixels on the screen, the corrected signals for one screen are outputted.

By doing such an operation, it is possible to remove the influence due to the distortion of the lens system.

However, since all input signals for one screen are once written in the memory and then the pixels are shifted, there has been a problem that it takes a long time to make corrections.

Besides, there has also been a problem that it becomes necessary to provide a memory with a large capacity for storing all input signals for one screen.

### SUMMARY OF THE INVENTION

The present invention has been made to solve such problems and has an object to provide an image distortion correcting device which can correct distortion of an image due to lens distortion by using a memory with a small capacity and in a short time.

According to the present invention, in an image distortion correcting device which captures an image signal by an image pickup camera including a large number of pixels and corrects distortion of an image due to lens distortion of the camera by shifting pixels, this device includes a memory for storing the image signal captured by the image pickup camera, and an arithmetic section for sequentially capturing the image signal of a screen composed of a plurality of lines by the image pickup camera to write it in the memory and reading out the image signal corresponding to each line of an output image from the memory in accordance with a shift amount necessary for each pixel to sequentially output it. The image signal of the screen composed of the plurality of lines is sequentially taken into the memory through the image pickup camera, the image signal corresponding to each line of the output image is read out in accordance with the shift amount necessary for each pixel, and is sequentially outputted. That is, the case is not such that the pixel is shifted after all image signals for one screen are written in the memory, but the image signal corresponding to each line of the output image is read out from the image signals written in the memory in accordance with the shift amount necessary for each pixel and is outputted. Thus, the time required for the correction of the image distortion is shortened, and the capacity of the memory can be reduced.

The shift amount necessary for each pixel may be in advance stored as a map in a ROM and the arithmetic section may shift each pixel on the basis of the map. In this case, since the shift amount necessary for each pixel is stored as the map, the arithmetic section can easily obtain the shift amount of each pixel by referring to the map.

Only shift amounts necessary for respective pixels in any one of quadrant with a center of the screen as an origin may be stored as a map in the ROM, and the arithmetic section may shift each pixel of not only the one quadrant but also the other quadrants on the basis of this map. In this case, only the shift amounts necessary for the pixels in any one quadrant are stored as the map, and with respect to the pixels of the other three quadrants, the shift of each pixel is made by using symmetry on the basis of this map. Thus, the map can be stored with a small capacity.

Instead of using the map, the arithmetic section may calculate the shift amount necessary for each pixel each time. In this case, since the shift amount necessary for each pixel is calculated each time, it becomes unnecessary to provide the map memory for storing the shift amount of each pixel as the map in advance.

### BRIEF DESCRIPTION OF THE DRAWINGS

Fig. 1 is a block diagram showing a structure of an image distortion correcting device of an embodiment of the present invention.

Fig. 2 is a view showing a shift amount of a pixel for a lens distortion correction.

Fig. 3 is a view showing a structure of a memory used in the embodiment.

Fig. 4 is a view for explaining a map used in another embodiment.

Fig. 5 is a view for explaining a calculation method of a shift amount of each pixel carried out in still another embodiment.

### DESCRIPTION OF THE PREFERRED EMBODIMENTS

Embodiments of the present invention will be described below with reference to the accompanying drawings.

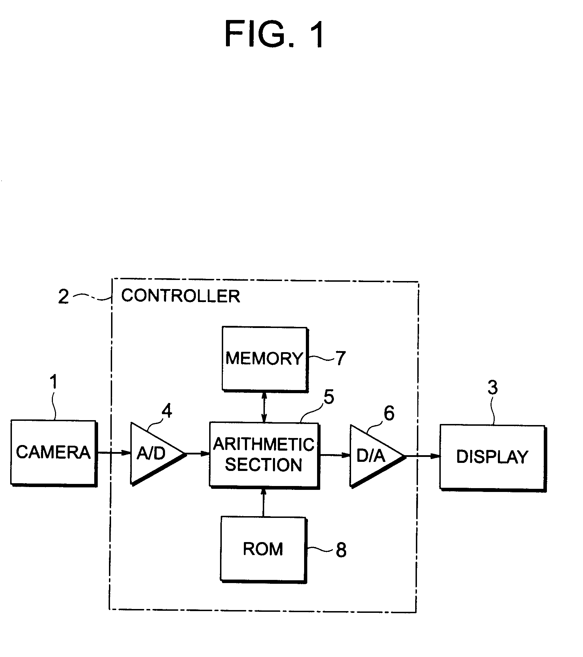

Fig. 1 shows a structure of an image distortion correcting device of an embodiment of the present invention. A controller 2 is connected to an image pickup camera 1, and a display 3 is connected to the controller 2. The controller 2 includes an A/D converter 4 connected to the camera 1, an arithmetic section 5 connected to this A/D converter 4, and a D/A converter 6 connected between the arithmetic section 5 and the display 3. Further, the controller 2 is provided with a memory 7 and a ROM 8 which are connected to the arithmetic section 5. The memory 7 is for storing image signals captured by the camera 1. Besides, the ROM 8 stores shift amounts of respective pixels necessary for correcting distortion of an image due to lens distortion of the camera 1 as a map in advance.

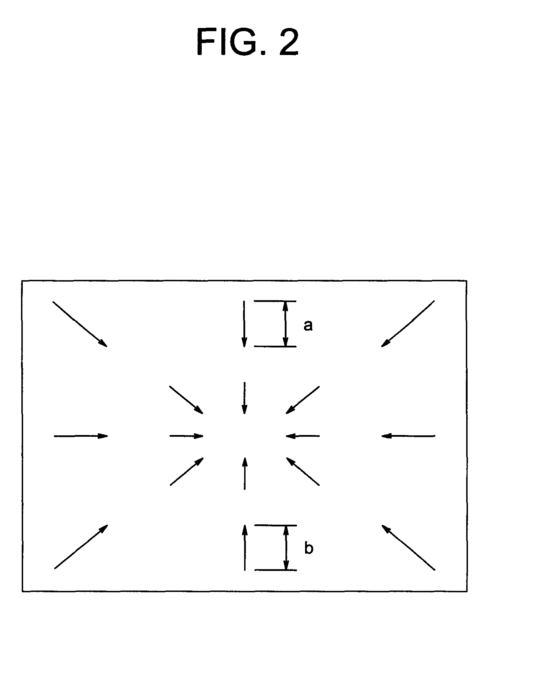

Next, the function of the image distortion correcting device of this embodiment will be described. Note that, as shown in Fig. 2, since the influence of the lens distortion of the camera 1 becomes large toward the peripheral portion of a screen, the shift amount of the pixel necessary for the correction of the lens distortion also becomes large toward the peripheral portion of the screen. Now, it is assumed that a downward direction is represented by (+), an upward direction is represented by (-), the maximum shift amount in the vertical direction among a plurality of pixels is made (+a), the minimum shift amount is made (-b), and image signals are sequentially inputted from the uppermost line of the screen to a lower line.

The image signal of the uppermost line of the screen is sequentially captured by the camera 1 and is A/D converted by the A/D converter 4, and then, it is written in the memory 7 through the arithmetic section 5. Next, the image signal at the second line from the upper end of the screen is captured, and in the same way, the image signals of lower lines are sequentially captured and are written in the memory 7.

The arithmetic section 5 reads shift amounts of respective pixels in horizontal and vertical directions (downward direction is made +, upward direction is made -), necessary for correcting the distortion of an image due to the lens distortion of the camera 1, from the map stored in the ROM 8, reads out the image signals corresponding to the uppermost line of an output image from the memory 7 in accordance with the shift amounts, makes them sequentially D/A converted by the D/A converter 6, and outputs them to the display 3. Similarly, the arithmetic section 5 reads out the image signals corresponding to the second line from the upper end of the output image from the memory 7 in accordance with the shift amount of each pixel and outputs. In this way, the arithmetic section 5 sequentially reads out the image signals corresponding to the lower lines of the output image from the memory 7 and outputs.

In this way, the image signals are sequentially captured from the uppermost line of the screen to the lower lines and are written in the memory 7, and the image signals corresponding to the respective lines of the output image are sequentially read out from the memory 7 in accordance with the shift amounts of the respective pixels and are outputted to the display 3.

When writing of the image signal on the lowermost line of the screen is completed, capture of the image signal on the uppermost line of the screen is again performed circularly. Similarly, when output of the image signal on the lowermost line of the output image is completed, the image signal corresponding to the uppermost line of the output image is again read out from the memory 7 and is outputted circularly.

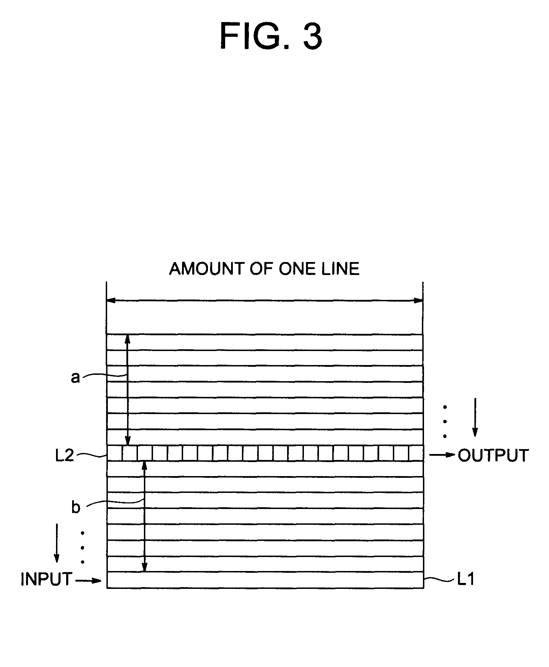

As shown in Fig. 3, the downward maximum shift amount of a pixel is "a", and the upward maximum shift amount is "b". Thus, inclusive of a line L1 for capturing the image signal and a line L2 for outputting it, it is sufficient if the minimum necessary capacity of the memory 7 is (a + b + 1 + 1) lines.

Note that, in the above embodiment, although the image signal is sequentially inputted from the uppermost line of the screen to the lower lines, the invention is not limited to this, and to the contrary, the image signal may be sequentially inputted from the lowermost line to the upper lines.

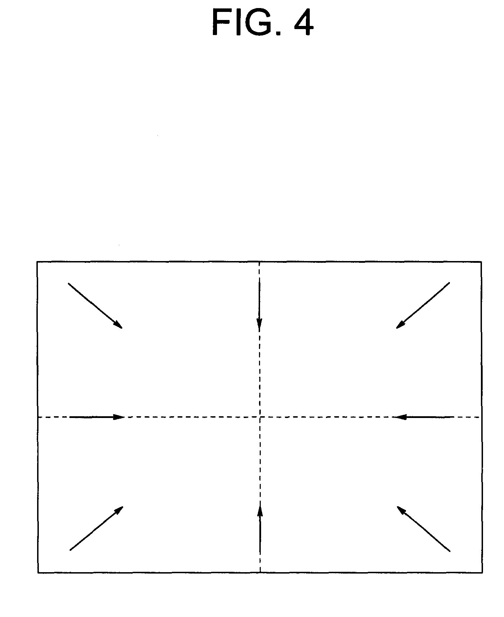

Besides, as shown in Fig. 4, since the lens distortion is horizontally and vertically symmetrical with respect to the lens center, such a structure may be adopted that map data of only one quadrant of the first to fourth quadrants are stored in the ROM 8 as a map of shift amounts necessary for the respective pixels, and with respect to the pixels of the other three quadrants, the arithmetic section 5 shifts the respective pixels by using symmetry on the basis of the map data. By doing so, the capacity of the ROM 8 can be reduced.

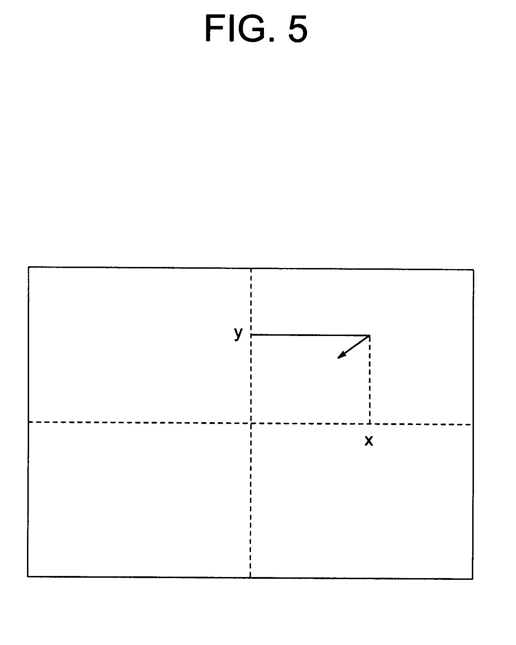

Besides, as shown in Fig. 5, without using the map, the arithmetic section 5 may calculate the shift amount each time in accordance with the coordinate (x, y) of each pixel.

The image distortion correcting device of the present invention can be applied to not only a display method of a noninterlace system generally adopted in a computer or the like, but also a display method of an interlace system adopted in television or the like.

As described above, according to the present invention, an image signal of a screen composed of a plurality of lines is sequentially captured by an image pickup camera and is written in a memory, and an image signal corresponding to each line of an output image is read out from the memory in accordance with a shift amount necessary for each pixel and is sequentially outputted. Thus, it is not necessary to write all input signals for one screen in a memory as in the prior art, and the distortion or the like of an image due to the lens distortion can be corrected in a short time, and the capacity of the memory can be reduced.

If shift amounts necessary for respective pixels are stored as a map, the arithmetic section can easily obtain the shift amounts of the respective pixels by referring to this map.

If only shift amounts necessary for pixels in any one of quadrants are stored as a map and each pixel of the other three quadrants is also shifted on the basis of this map, the map can be stored with a small capacity.

If the shift amount necessary for each pixel is calculated each time, it becomes unnecessary to provide the map memory for storing the shift amounts of the respective pixels in advance.

In an image distortion correcting device of the present invention, an arithmetic section sequentially captures an image signal of a screen composed of a plurality of lines by an image pickup camera and writes it in a memory, obtains a shift amount necessary for each pixel on the basis of a map stored in a ROM, and reads out an image signal corresponding to each line of an output image from the memory in accordance with this shift amount and sequentially outputs it to a display.

## Claims

1. An image distortion correcting device which captures an image signal by an image pickup camera including a large number of pixels and corrects distortion of an image due to lens distortion of the camera by shifting pixels, the device comprising:
a memory for storing the image signal captured by the image pickup camera; and
an arithmetic section for sequentially capturing the image signal of a screen composed of a plurality of lines by the image pickup camera to write it in the memory and reading out the image signal corresponding to each line of an output image from the memory in accordance with a shift amount necessary for each pixel to sequentially output.

2. An image distortion correcting device according to claim 1 further comprising a ROM storing the shift amount necessary for each pixel as a map, the arithmetic section shifting each pixel on the basis of the map.

3. An image distortion correcting device according to claim 1 further comprising a ROM storing as a map the shift amount necessary for each pixel in any one of quadrants with a center of the screen as an origin, the arithmetic section shifting each pixel of not only the one quadrant but also the other quadrants on the basis of the map.

4. An image distortion correcting device according to claim 1 wherein the arithmetic section calculates the shift amount necessary for each pixel each time.

5. An image distortion correcting device according to claim 1 further comprising:
an A/D converter for A/D converting the image signal inputted from the image pickup camera to output it to the arithmetic section; and
a D/A converter for D/A converting the image signal outputted from the arithmetic section.
